# EUROPÄISCHE PATENTANMELDUNG

(11) **EP 1 411 265 A2**
(43) Veröffentlichungstag der Anmeldung: **21.04.2004**
(21) Anmeldenummer: 03023194.8
(22) Anmeldetag: 13.10.2003
(51) Int. Cl.: F16F 1/38

(54) **Drehmomentstütze, insbesondere zum Abstützen des Motors an der Karosserie eines Kraftfahrzeugs**

(30) Priorität: 14.10.2002 DE 10247757
(71) Anmelder: Trelleborg Automotive Technical Centre GmbH, 56203 Höhr-Grenzhausen (DE)
(72) Erfinder: Scharf, Jörg, 65558 Eppenrod (DE)
(74) Vertreter: Preissner, Nicolaus, Dipl.-Ing.

(57) **Zusammenfassung**

Eine Drehmomentstütze, insbesondere zum Abstützen des Motors an der Karosserie eines Kraftfahrzeugs, ist mit einem ersten Buchsengehäuse (11), in dem eine erste Innenhülse (30) angeordnet ist, einem zweiten Buchsengehäuse (12), in dem eine zweite Innenhülse (31) angeordnet ist, einem das erste Buchsengehäuse (11) und das zweite Buchsengehäuse (12) miteinander verbindenden Stützarm (13) und einem gummielastischen Dämpfungskörper (20) versehen. Der Dämpfungskörper (20) ist in das erste Buchsengehäuse (11) und das zweite Buchsengehäuse (12) einvulkanisiert. Zudem stützt der Dämpfungskörper (20) die erste Innenhülse (30) und die zweite Innenhülse (31) ab. Um eine derartige Drehmomentstütze dahingehend weiterzubilden, daß sich bei einfacher und kostengünstiger Fertigung eine verhältnismäßig lange Lebensdauer erzielen läßt, weist der Dämpfungskörper (20) zumindest im Bereich des ersten Buchsengehäuses (11) eine Innenöffnung (21) auf, in welche die erste Innenhülse (30) mit einer radialen Vorspannung eingepreßt ist.

## Beschreibung

Die Erfindung betrifft eine Drehmomentstütze, die insbesondere zum Abstützen des Motors an der Karosserie eines Kraftfahrzeugs dient. Die Drehmomentstütze ist mit einem ersten Buchsengehäuse, in dem eine erste Innenhülse angeordnet ist, einem zweiten Buchsengehäuse, in dem eine zweite Innenhülse angeordnet ist, einem das erste Buchsengehäuse und das zweite Buchsengehäuse miteinander verbindenden Stützarm und einem gummielastischen Dämpfungskörper versehen. Der Dämpfungskörper ist in das erste Buchsengehäuse und das zweite Buchsengehäuse einvulkanisiert. Zudem stützt der Dämpfungskörper die erste Innenhülse und die zweite Innenhülse ab.

Die EP 0 849 491 A2 offenbart eine Drehmomentstütze, die einen Stützarm aufweist, der an seinen gegenüberliegenden Enden jeweils mit einem eine Innenhülse dämpfend aufnehmenden Buchsengehäuse versehen ist. Der Stützarm und die Buchsengehäuse bilden einen Tragkäfig, der stoffschlüssig mit einem aus einem elastomeren Werkstoff bestehenden Dämpfungskörper verbunden ist. Der die Innenhülsen in den Buchsengehäusen abstützende Dämpfungskörper wird direkt in die Buchsengehäuse einvulkanisiert, wobei während der Vulkanisation des Dämpfungskörpers zugleich die Innenhülsen stoffschlüssig mit diesem verbunden werden. Eine auf diese Weise hergestellte Drehmomentstütze ist ferner aus der DE 196 31 893 A1 bekannt.

Gemeinsam ist den bekannten Drehmomentstützen, daß die in dem Buchsengehäuse aufgenommene Innenhülse während der Vulkanisation des Dämpfungskörpers stoffschlüssig mit diesem verbunden wird. Wenngleich sich auf diese Weise eine verhältnismäßig einfache Herstellung der Drehmomentstütze ergibt, hat sich die stoffschlüssige Verbindung der Innenhülse mit dem Dämpfungskörper als ungeeignet erwiesen, um die Innenhülse mit einer die Lebensdauer der Drehmomentstütze erhöhenden Vorspannung zu beaufschlagen. Denn um eine Vorspannung zu erreichen, ist es erforderlich, die Innenhülse als separat zu fertigende Lagerbuchse auszugestalten, die dann in das Buchsengehäuse der Drehmomentstütze eingesetzt wird.

Der Erfindung liegt die Aufgabe zugrunde, eine Drehmomentstütze der eingangs genannten Art dahingehend weiterzubilden, daß sich bei einfacher und kostengünstiger Fertigung eine verhältnismäßig lange Lebensdauer erzielen läßt.

Zur Lösung dieser Aufgabe ist bei einer Drehmomentstütze mit den oben genannten Merkmalen in Übereinstimmung mit Anspruch 1 erfindungsgemäß vorgesehen, daß der Dämpfungskörper zumindest im Bereich des ersten Buchsengehäuses eine Innenöffnung aufweist, in welche die erste Innenhülse mit einer radialen Vorspannung eingepreßt ist.

Die erfindungsgemäße Drehmomentstütze beruht auf der Erkenntnis, die Innenhülse in eine Innenöffnung des Buchsengehäuses kraftschlüssig einzupressen. Auf diese Weise ergibt sich eine radiale Vorspannung der Innenhülse, die zu einer verhältnismäßig langen Lebensdauer beiträgt. Die Innenöffnung und die Innenhülse stellen eine Übermaßpassung dar, die einen zuverlässigen Preßsitz der Innenhülse in dem Dämpfungskörper sicherstellt. Einer stoffschlüssigen Verbindung von Innenhülse und Dämpfungskörper, wie im Stand der Technik üblich, bedarf es insofern nicht mehr. Das Einpressen der Innenhülse in den Dämpfungskörper läßt sich auf einfache Weise realisieren, so daß eine kostengünstige Fertigung gewährleistet ist. Zudem wird durch das Einpressen der Innenhülse in den Dämpfungskörper eine modulare Bauweise ermöglicht, indem eine dem jeweiligen Anwendungsfall entsprechend ausgestaltete Innenhülse eingesetzt werden kann. Die Größe der radialen Vorspannung läßt sich dabei durch das Übermaß zwischen Innenhülse und Innenöffnung variieren.

Vorteilhafte Ausgestaltungen der erfindungsgemäßen Drehmomentstütze stellen die Gegenstände der Ansprüche 2 bis 16 dar.

Vorteilhaft besteht der Dämpfungskörper aus einem gummielastischen Werkstoff, vorzugsweise Naturkautschuk oder Ethylen-Propylen-Dien-Kautschuk (EPDM).

Von Vorteil ist ferner, wenn das erste Buchsengehäuse, das zweite Buchsengehäuse und der Stützarm einen Tragkäfig für den einvulkanisierten Dämpfungskörper bilden. Der Dämpfungskörper kann auf diese Weise direkt in die Buchsengehäuse einvulkanisiert werden, wodurch sich eine zuverlässige stoffschlüssige Verbindung ergibt.

Vorteilhafterweise ist der Tragkäfig als einteiliges Gußstück ausgebildet, das aus Metall, vorzugsweise Aluminium, oder Kunststoff besteht, um auf einfache Weise eine komplexe Formgebung zu ermöglichen. In einer weiteren Ausgestaltung der erfindungsgemäßen Drehmomentstütze ist der Tragkäfig bevorzugt durch Umformen, vorzugsweise Tiefziehen, aus Blech oder Kunststoffplatten gefertigt. Eine derartige Fertigung ist vergleichsweise kostengünstig und gewährleistet eine leichtgewichtige Bauweise.

Bevorzugt bildet der Dämpfungskörper einen Überzug auf dem Tragkäfig aus. Der sich etwa bei der Vulkanisation des Dämpfungskörpers ergebende Überzug stellt eine Schutzschicht für den aus Gründen einer hohen Festigkeit zweckmäßigerweise aus Metall gefertigten Tragkäfig dar, welche die Korrosionsbeständigkeit der Drehmomentstütze erhöht.

In einer bevorzugten Ausgestaltung der erfindungsgemäßen Drehmomentstütze ist die zweite Innenhülse stoffschlüssig mit dem Dämpfungskörper verbunden. Der Stoffschluß zwischen der zweiten Innenhülse und dem Dämpfungskörper kann in an sich bekannter Weise bei der Vulkanisation des Dämpfungskörpers erzeugt werden.

Weiterhin ist es von Vorteil, die zweite Innenhülse mit einer Vielzahl an Ausnehmungen zu versehen. Die Ausnehmungen tragen dazu bei, das Gewicht der beispielsweise annähernd trapezförmig ausgestalteten zweiten Innenhülse zu verringern.

Die durch die erste Innenhülse verlaufende Mittelachse kann parallel oder winkelig, vorzugsweise orthogonal, zu einer durch die zweite Innenhülse verlaufenden Mittelachse orientiert sein. Die Orientierung der Mittelachsen hängt regelmäßig von der Einbaulage der Drehmomentstütze ab.

In Hinsicht auf eine vorgegebene Steifigkeit der Drehmomentstütze hat es sich als vorteilhaft erwiesen, wenn das zweite Buchsengehäuse einen Durchmesser aufweist, der größer ist als der Durchmesser des ersten Buchsengehäuses.

Um das Dämpfungsvermögen des Dämpfungskörpers gezielt zu beeinflussen, ist der Dämpfungskörper bevorzugt im Bereich des zweiten Buchsengehäuses mit Ausnehmungen versehen, wobei vorzugsweise zumindest eine der Ausnehmungen die zweite Innenhülse teilweise umrandet.

In einer bevorzugten Ausgestaltung der erfindungsgemäßen Drehmomentstütze sind das zweite Buchsengehäuse und/oder der Stützarm mit einem nach außen gewölbten Wulst versehen. Der Wulst erhöht die Steifigkeit der Drehmomentstütze, und zwar vor allem dann, wenn diese durch Umformen gefertigt wird. In diesem Zusammenhang hat es sich ferner als vorteilhaft erwiesen, wenn das zweite Buchsengehäuse eine im wesentlichen kreiszylindrische Mantelfläche aufweist, die im Bereich des Wulstes mit wenigstens einer Einbuchtung versehen ist. Durch die Einbuchtung läßt sich zum einen die Festigkeit des zweiten Buchsengehäuses erhöhen. Zum anderen trägt die Einbuchtung zu einem zusätzlichen Formschluß zwischen dem zweiten Buchsengehäuse und dem Dämpfungskörper bei mit der Folge, daß der Dämpfungskörper zuverlässig mit dem zweiten Buchsengehäuse verbunden wird. Darüber hinaus läßt sich durch die Einbuchtung das Dämpfungsvermögen des Dämpfungskörpers beeinflussen.

Vor allem dann, wenn die Drehmomentstütze durch Umformen gefertigt wird, hat es sich zudem als besonders vorteilhaft herausgestellt, den Stützarm mit wenigstens einer Verstärkungsplatte zu versehen, die sich in einer zu der durch die zweite Innenhülse verlaufenden Mittelachse senkrechten Ebene erstreckt. Die Verstärkungsplatte erhöht auf diese Weise die Steifigkeit der Drehmomentstütze unter anderem in Richtung von deren Längsachse.

Bevorzugt geht die Verstärkungsplatte in einen radial vorstehenden Randabschnitt des zweiten Buchsengehäuses über, um einen gleichmäßigen Kraftfluß zu gewährleisten. In diesem Zusammenhang hat es sich ferner als vorteilhaft erwiesen, den Stützarm im Bereich des dem ersten Buchsengehäuse zugewandten Endes der Verstärkungsplatte mit einer Aussparung zu versehen, die das Auftreten von Spannungsspitzen vermeiden hilft.

Einzelheiten und weitere Vorteile der erfindungsgemäßen Drehmomentstütze ergeben sich aus der nachfolgenden Beschreibung eines bevorzugten Ausführungsbeispieles. In den das Ausführungsbeispiel lediglich schematisch darstellenden Zeichnungen veranschaulichen im einzelnen:
- Fig. 1: eine perspektivische Ansicht einer Drehmomentstütze;
- Fig. 2: eine Seitenansicht der Drehmomentstütze gemäß Fig. 1;
- Fig. 3: einen Schnitt gemäß der Linie III-III in Fig. 2;
- Fig. 4: eine Draufsicht auf die Drehmomentstütze gemäß Fig. 1;
- Fig. 5: einen Schnitt gemäß der Linie V-V in Fig. 4;
- Fig. 6: einen Schnitt gemäß der Linie VI-VI in Fig. 4;
- Fig. 7: eine vergrößerte Darstellung des in Fig. 6 mit VII gekennzeichneten Bereichs;
- Fig. 8: einen Schnitt gemäß der Linie VIII-VIII in Fig. 4;
- Fig. 9: eine vergrößerte Darstellung des in Fig. 8 mit IX gekennzeichneten Bereichs;
- Fig. 10: eine Draufsicht auf einen Tragkäfig, der die Drehmomentstütze gemäß Fig. 1 bildet;
- Fig. 11: einen Schnitt gemäß der Linie XI-XI in Fig. 10;
- Fig. 12: einen Schnitt gemäß der Linie XII-XII in Fig. 10;
- Fig. 13: xeinen Schnitt gemäß der Linie XIII-XIII in Fig. 10 und
- Fig. 14: eine vergrößerte Darstellung des in Fig. 2 mit XIV gekennzeichneten Bereichs.

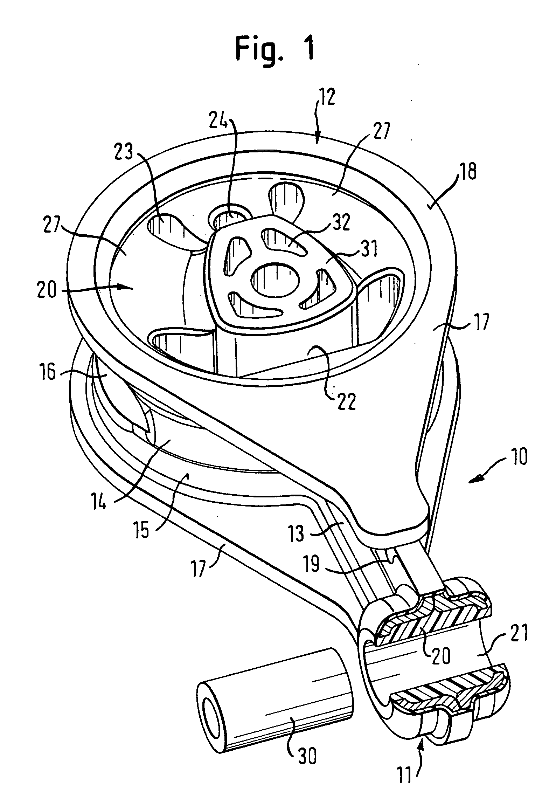

Die in Fig. 1 dargestellte Drehmomentstütze dient zur Abstützung des Motors an der Karosserie eines Kraftfahrzeugs. Die Drehmomentstütze weist zu diesem Zweck ein erstes Buchsengehäuse 11 und ein zweites Buchsengehäuse 12 auf, die durch einen Stützarm 13 miteinander verbunden sind. Das Buchsengehäuse 11, das Buchsengehäuse 12 und der Stützarm 13 bilden einen Tragkäfig 10 für einen aus einem gummielastischen Werkstoff bestehenden Dämpfungskörper 20. Der Tragkäfig 10 ist aus einem umgeformten und stellenweise verschweißten Blech gefertigt.

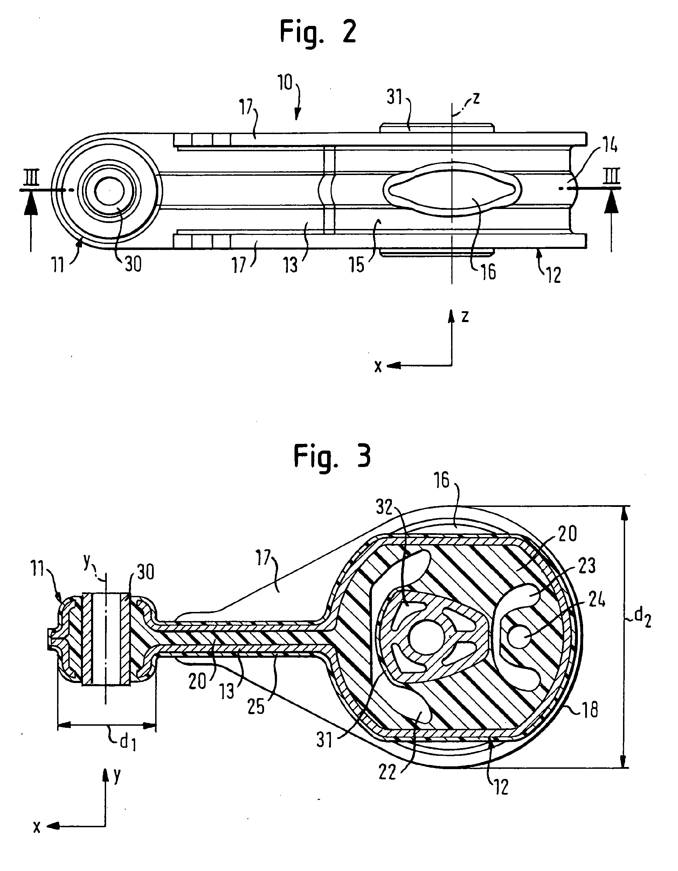

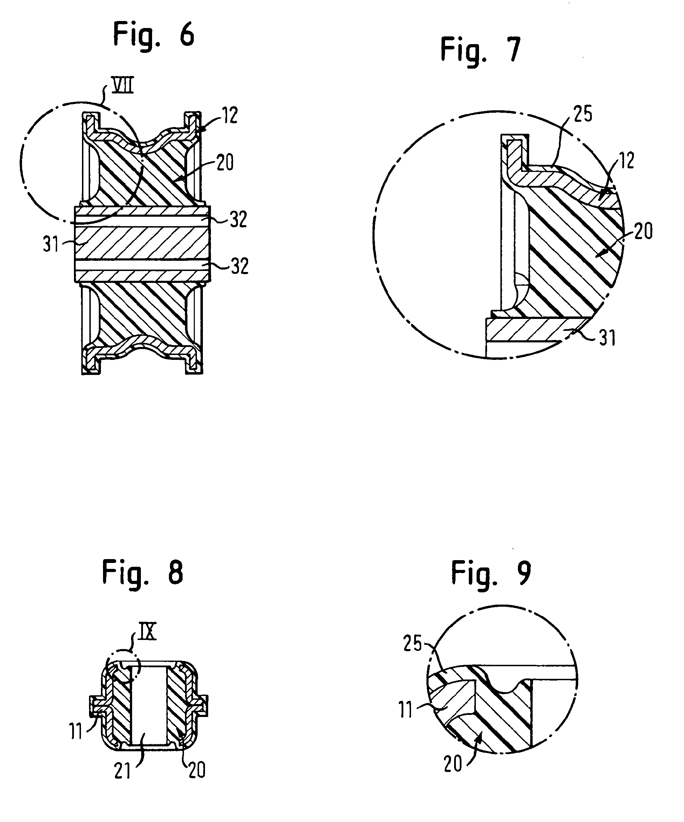

Wie insbesondere die Fig. 2 bis 9 erkennen lassen, ist der Dämpfungskörper 20 stoffschlüssig mit dem Tragkäfig 10 verbunden. Zu diesem Zweck wird der Tragkäfig 10 bei der Vulkanisation des Dämpfungskörpers 20 von diesem umschlossen. Wie vor allem die Fig. 7 und 9 erkennen lassen, schützt ein auf der Außenseite des Tragkäfigs 10 aufgebrachter Überzug 25 den Tragkäfig 10 vor Korrosion und anderen Umgebungseinflüssen.

Wie insbesondere aus den Fig. 1 und 3 ersichtlich, ist der Dämpfungskörper 20 im Bereich des Buchsengehäuses 11 mit einer Innenöffnung 21 versehen, in die eine erste Innenhülse 30 mit einer radialen Vorspannung eingepreßt ist. Die Innenhülse 30 ist somit kraftschlüssig mit dem Dämpfungskörper 20 verbunden. Demgegenüber ist eine in dem Buchsengehäuse 12 angeordnete zweite Innenhülse 31 stoffschlüssig mit dem Dämpfungskörper 20 verbunden. Die annähernd trapezförmig ausgestaltete und zur Verringerung ihres Gewichts mit einer Vielzahl an Ausnehmungen 32 versehene Innenhülse 31 wird bei der Herstellung der Drehmomentstütze durch die Vulkanisation des Dämpfungskörpers 20 mit diesem verbunden. Der Dämpfungskörper 20 weist im Bereich des zweiten Buchsengehäuses 12 ferner Ausnehmungen 22, 23, 24 auf, welche die Verformungsfähigkeit des Dämpfungskörpers 20 und damit das Dämpfungsverhalten der Drehmomentstütze gezielt beeinflussen. Die Ausnehmung 22, welche die Innenhülse 31 teilweise umrandet, bildet zusammen mit der Ausnehmung 23 zwei sich winkelig zur Längsachse x der Drehmomentstütze erstreckende Schenkel 27 des Dämpfungskörpers 20. Diese bilden eine Tragfeder, welche die Innenhülse 31 in Hinsicht auf ein vorgegebenes Dämpfungsverhalten gezielt abstützt. Hierzu trägt auch bei, daß das Buchsengehäuse 12 einen Durchmesser d₂ aufweist, der größer ist als der Durchmesser d₁ des Buchsengehäuses 11, wie aus Fig. 3 ersichtlich ist.

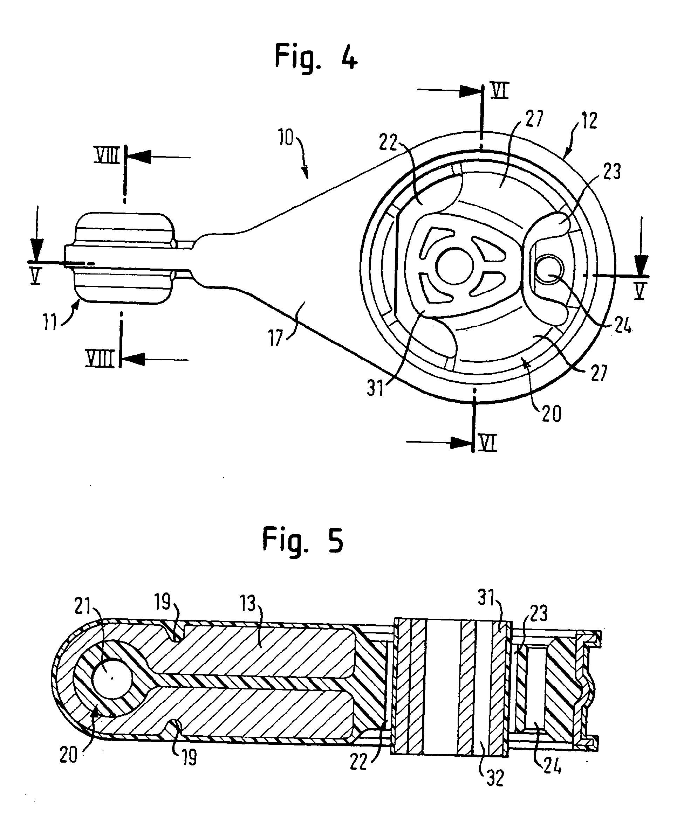

Fig. 3 läßt ferner erkennen, daß eine durch die Innenhülse 30 verlaufende Mittelachse y orthogonal zu einer durch die Innenhülse 31 verlaufenden Mittelachse z orientiert ist. Der Stützarm 13 ist mit zwei deckungsgleich übereinander angeordneten Verstärkungsplatten 17 versehen, die sich in einer zu der Mittelachse z senkrechten Ebene erstrecken. Die Verstärkungsplatten 17 dienen dazu, die Steifigkeit der in erster Linie durch Umformen gefertigten Drehmomentstütze in Richtung der Längsachse x zu erhöhen. Die sich von dem Buchsengehäuse 11 konisch erweiternden Verstärkungsplatten 17 gehen in einen das Buchsengehäuse 12 umrandenden Randabschnitt 18 über, der gegenüber einer im wesentlichen kreiszylindrischen Mantelfläche 15 des Buchsengehäuses 12 in radialer Richtung vorsteht. Im Bereich des dem ersten Buchsengehäuse 11 zugewandten Endes der Verstärkungsplatte 17 ist der Stützarm 13 mit einer Aussparung 19 versehen, wie insbesondere in den Fig. 1 und 5 zu erkennen ist. Die eine Einkerbung der der Verstärkungsplatte 17 zugewandten Stirnfläche des Stützarms 13 darstellende Aussparung 19 dient dazu, Spannungsspitzen im Bereich des Übergangs von dem Buchsengehäuse 11 auf den Stützarm 13 zu vermeiden.

Weiterhin sind das Buchsengehäuse 12 und der Stützarm 13 mit einem nach außen gewölbten Wulst 14 versehen, wie insbesondere in Fig. 2 zu erkennen ist. Der Wulst 14 versteift den Tragkäfig 10 und damit die Drehmomentstütze. Die Mantelfläche 15 des Buchsengehäuses 12 ist im Bereich des Wulstes 14 mit zwei gegenüberliegenden Einbuchtungen 16 versehen. Die Einbuchtungen 16 tragen zum einen zu einem zusätzlichen Formschluß zwischen dem Dämpfungskörper 20 und dem Buchsengehäuse 12 bei. Zum anderen beeinflussen die im Bereich der Schenkel 27 des Dämpfungskörpers 20 angeordneten Einbuchtungen 16 das Dämpfungsvermögen der durch die Schenkel 27 gebildeten und die Innenhülse 31 abstützenden Tragfeder.

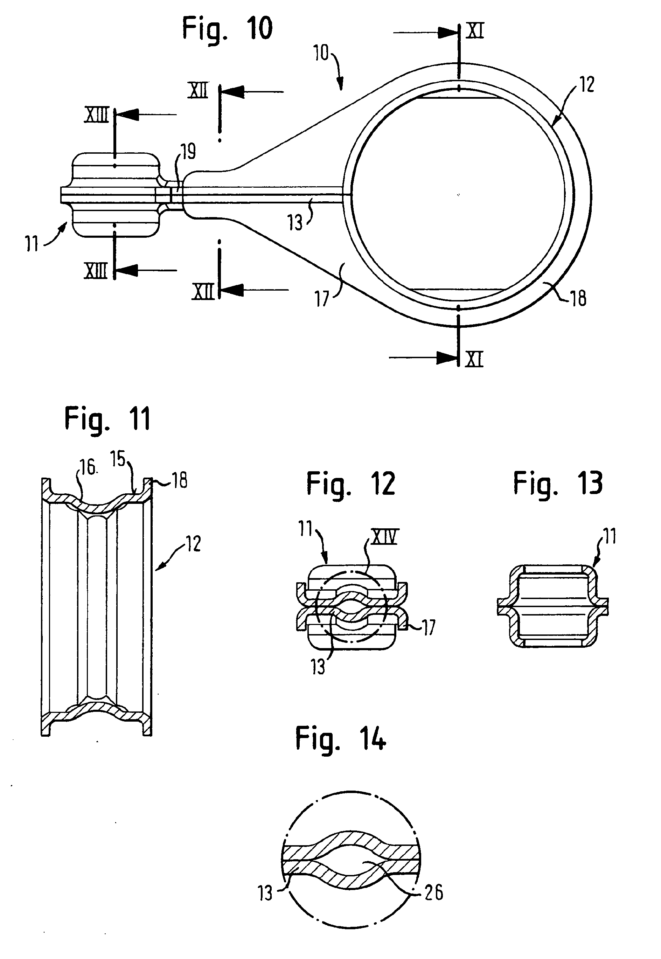

In den Fig. 10 bis 14 ist der Tragkäfig 10 ohne den Dämpfungskörper 20 und ohne die Innenhülsen 30, 31 dargestellt. Fig. 11 läßt den Randabschnitt 18 und die Einbuchtung 16 der Mantelfläche 15 besonders gut erkennen. Zudem ist aus den Fig. 12 bis 14 deutlich ersichtlich, daß der Tragkäfig 10 durch Umformen gefertigt ist. Der sich aus zwei aneinandergrenzenden Blechabschnitten zusammensetzende Stützarm 13 ist so geformt, daß ein Durchgang 26 gebildet wird, wie insbesondere aus Fig. 14 ersichtlich ist. Der, wie etwa Fig. 3 erkennen läßt, den Dämpfungskörper 20 aufnehmende Durchgang 26 gewährleistet eine durchgehende Verbindung des Dämpfungskörpers 20 von dem Bereich des Buchsengehäuses 11 in den Bereich des Buchsengehäuses 12 und trägt somit zu einer zuverlässigen Befestigung des Dämpfungskörpers 20 an dem Tragkäfig 10 bei.

Die zuvor beschriebene Drehmomentstütze zeichnet sich durch eine einfache und kostengünstige Fertigung aus. Grund hierfür ist vor allem, daß der Tragkäfig 10 mit dem Dämpfungskörper 20 während dessen Vulkanisation stoffschlüssig verbunden wird. Der durch Umformen eines entsprechend zugeschnittenen Bleches gefertigte Tragkäfig 10 trägt überdies zu einer im Fahrzeugbau notwendigen leichgewichtigen Bausweise bei. Darüber hinaus verfügt die Drehmomentstütze über eine verhältnismäßig lange Lebensdauer. Dies ist vor allem darauf zurückzuführen, daß die Innenhülse 30 mit einer radialen Vorspannung beaufschlagt ist. Die radiale Vorspannung wird dadurch erreicht, daß die Innenhülse 30 in die Innenöffnung 21 des Dämpfungskörpers 20 eingepreßt ist. Im Unterschied hierzu ist die Innenhülse 31 im Bereich des Buchsengehäuses 12 stoffschlüssig mit dem Dämpfungskörper 20 verbunden. Auf diese Weise ist es möglich, daß die Innenhülse 31 teilweise von den Ausnehmungen 22, 23 umrandet wird, um die Schenkel 27 und damit die die Innenhülse 31 in dem Buchsengehäuse 12 abstützende Tragfeder zu bilden. Die kraftschlüssige Verbindung der Innenhülse 30 mit dem Dämpfungskörper 20 trägt nicht zuletzt zu einer recyclinggerechten Ausgestaltung der Drehmomentstütze bei, da sich die Innenhülse 30 und der Dämpfungskörper 20 verhältnismäßig einfach voneinander trennen lassen.

### Bezugszeichenliste

- 10: Tragkäfig
- 11: erstes Buchsengehäuse
- 12: zweites Buchsengehäuse
- 13: Stützarm
- 14: Wulst
- 15: Mantelfläche
- 16: Einbuchtung
- 17: Verstärkungsplatte
- 18: Randabschnitt
- 19: Aussparung

- 20: Dämpfungskörper
- 21: Innenöffnung
- 22: Ausnehmung
- 23: Ausnehmung
- 24: Ausnehmung
- 25: Überzug
- 26: Durchgang
- 27: Schenkel

- 30: Innenhülse
- 31: Innenhülse
- 32: Ausnehmung

- d₁: Durchmesser
- d₂: Durchmesser
- x: Längsachse
- y: Mittelachse
- z: Mittelachse

## Patentansprüche

1. Drehmomentstütze, insbesondere zum Abstützen des Motors an der Karosserie eines Kraftfahrzeugs, mit einem ersten Buchsengehäuse (11), in dem eine erste Innenhülse (30) angeordnet ist, einem zweiten Buchsengehäuse (12), in dem eine zweite Innenhülse (31) angeordnet ist, einem das erste Buchsengehäuse (11) und das zweite Buchsengehäuse (12) miteinander verbindenden Stützarm (13) und einem gummielastischen Dämpfungskörper (20), der in das erste Buchsengehäuse (11) und das zweite Buchsengehäuse (12) einvulkanisiert ist und die erste Innenhülse (30) und die zweite Innenhülse (31) abstützt, **dadurch gekennzeichnet, daß** der Dämpfungskörper (20) zumindest im Bereich des ersten Buchsengehäuses (11) eine Innenöffnung (21) aufweist, in welche die erste Innenhülse (30) mit einer radialen Vorspannung eingepreßt ist.

2. Drehmomentstütze nach Anspruch 1, **dadurch gekennzeichnet, daß** der Dämpfungskörper (20) aus einem gummielastischen Werkstoff, vorzugsweise Naturkautschuk oder Ethylen-Propylen-Dien-Kautschuk, besteht.

3. Drehmomentstütze nach Anspruch 2, **dadurch gekennzeichnet, daß** das erste Buchsengehäuse (11), das zweite Buchsengehäuse (12) und der Stützarm (13) einen Tragkäfig (10) für den einvulkanisierten Dämpfungskörper (20) bilden.

4. Drehmomentstütze nach Anspruch 3, **dadurch gekennzeichnet, daß** der Tragkäfig (10) als einteiliges Gußstück ausgebildet ist, das aus Metall, vorzugsweise Aluminium, oder Kunststoff besteht.

5. Drehmomentstütze nach Anspruch 3, **dadurch gekennzeichnet, daß** der Tragkäfig (10) durch Umformen, vorzugsweise Tiefziehen, aus Blech oder Kunststoffplatten gefertigt ist.

6. Drehmomentstütze nach einem der Ansprüche 3 bis 5, **dadurch gekennzeichnet, daß** der Dämpfungskörper (20) einen Überzug (25) auf dem Tragkäfig (10) ausbildet.

7. Drehmomentstütze nach einem der Ansprüche 3 bis 6, **dadurch gekennzeichnet, daß** die zweite Innenhülse (31) stoffschlüssig mit dem Dämpfungskörper (20) verbunden ist.

8. Drehmomentstütze nach einem der Ansprüche 1 bis 7, **dadurch gekennzeichnet, daß** die zweite Innenhülse (31) mit einer Vielzahl an Ausnehmungen (32) versehen ist.

9. Drehmomentstütze nach einem der Ansprüche 1 bis 8, **dadurch gekennzeichnet, daß** eine durch die erste Innenhülse (30) verlaufende Mittelachse (y) parallel oder winkelig, vorzugsweise orthogonal, zu einer durch die zweite Innenhülse (31) verlaufenden Mittelachse (z) orientiert ist.

10. Drehmomentstütze nach einem der Ansprüche 1 bis 9, **dadurch gekennzeichnet, daß** das zweite Buchsengehäuse (12) einen Durchmesser (d₂) aufweist, der größer ist als der Durchmesser (d₁) des ersten Buchsengehäuses (11).

11. Drehmomentstütze nach einem der Ansprüche 1 bis 10, **dadurch gekennzeichnet, daß** der Dämpfungskörper (20) im Bereich des zweiten Buchsengehäuses (12) mit Ausnehmungen (22, 23, 24) versehen ist, wobei vorzugsweise zumindest eine der Ausnehmungen (22) die zweite Innenhülse (31) teilweise umrandet.

12. Drehmomentstütze nach einem der Ansprüche 1 bis 11, **dadurch gekennzeichnet, daß** das zweite Buchsengehäuse (12) und/oder der Stützarm (13) mit einem nach außen gewölbten Wulst (14) versehen sind.

13. Drehmomentstütze nach Anspruch 12, **dadurch gekennzeichnet, daß** das zweite Buchsengehäuse (12) eine im wesentlichen kreiszylindrische Mantelfläche (15) aufweist, die im Bereich des Wulstes (14) mit wenigstens einer Einbuchtung (16) versehen ist.

14. Drehmomentstütze nach einem der Ansprüche 1 bis 13, **dadurch gekennzeichnet, daß** der Stützarm (13) mit wenigstens einer Verstärkungsplatte (17) versehen ist, die sich in einer zu der durch die zweite Innenhülse (22) verlaufenden Mittelachse (z) senkrechten Ebene erstreckt.

15. Drehmomentstütze nach Anspruch 14, **dadurch gekennzeichnet, daß** die Verstärkungsplatte (17) in einen radial vorstehenden Randabschnitt (18) des zweiten Buchsengehäuses (12) übergeht.

16. Drehmomentstütze nach Anspruch 14 oder 15, **dadurch gekennzeichnet, daß** der Stützarm (13) im Bereich des dem ersten Buchsengehäuse (11) zugewandten Endes der Verstärkungsplatte (17) mit einer Aussparung (19) versehen ist.
